# EUROPEAN PATENT APPLICATION

(11) **EP 3 127 850 A1**
(43) Date of publication of application: **08.02.2017**
(21) Application number: 15180136.2
(22) Date of filing: 07.08.2015
(51) Int. Cl.: B66B 7/08

(54) **A METHOD A ROPE TERMINAL ARRANGEMENT AND AN ELEVATOR**

(71) Applicant: Kone Corporation, 00330 Helsinki (FI)
(72) Inventor: Lehtinen, Hannu, 00330 Helsinki (FI); Hallikainen, Pekka, 00330 Helsinki (FI)
(74) Representative: Kolster Oy Ab

(57) **Abstract**

The invention relates to a method for fabricating a rope terminal arrangement (A) of an elevator, comprising
providing a belt-shaped elevator rope (R) comprising a coating (5) forming the outer surface of the rope (R);
providing at least one gripping member (10,20) having a gripping face (12,22);
providing a wedge frame (F) delimiting a wedge-shaped space (W);
placing the gripping face (12,22) of each said gripping member (10,20) against the coating (5) of a rope section (S) of the belt-shaped rope (R);
bonding the gripping face (12,22) of each said gripping member (10,20) and the coating (5) of the rope section (S) together;
wedging the at least one gripping member (10,20) and the rope section (S) in the wedge shaped space (W).

The invention furthermore relates to a rope terminal arrangement (A) fabricated with the method, as well as to an elevator implementing the rope terminal arrangement (A).

## Description

### FIELD OF THE INVENTION

The invention relates to fixing of elevator ropes, more specifically to fabrication of a rope terminal arrangement of an elevator, wherein the elevator is in particular of a kind suitable for transporting passengers and/or goods.

### BACKGROUND OF THE INVENTION

In elevators, ropes are used as the means by which the elevator car is suspended. Ropes are further used as the means by which motive force is transmitted to the elevator car. Each rope typically has two ends, and each end needs to be fixed to a fixing base, which is typically either the load to be lifted or a stationary structure, depending on the type of suspension chosen for the elevator. The rope ends can be fixed directly to the load, such as the car or counterweight, which is the case when these are to be suspended with 1:1 ratio. Alternatively, the rope ends can be fixed to a stationary structure of the building, which is the case when the car and counterweight are to be suspended with 2:1 ratio, for instance.

In some modern elevators the ropes are belt-shaped. Belt-shaped. ropes of an elevator typically include one or several load bearing members that are elongated in the longitudinal direction of the rope and each of them forms a continuous structure that continues unbroken throughout the length of the rope. The load bearing members are the members of the rope which are configured to bear together the load exerted on the rope in its longitudinal direction. Ropes may further comprise non-bearing components, such as a coating, which cannot transmit tension in the above described way. The coating can be utilized for one or more purposes. For instance, the coating can be used to provide rope with a surface via which the rope can effectively engage frictionally with a drive wheel. The coating can also be used to provide the load bearing members of the rope with protection and/or for positioning these relative to each other. In prior art, such special ropes are known which may be damaged if sharp bends are caused in them. Such ropes may be well advised to be fixed without bending.

In prior art, a rope terminal solution not causing sharp bends in the rope has been contemplated for belt-shaped elevator ropes where the ropes are fixed to a fixing base with a rope gripping device arranged to grip a rope section of the belt-shaped rope via two gripping members their gripping faces being set against opposing lateral sides the rope section. The gripping members are slightly movable relative to each other such that the gap between them is narrowed so as to cause compression on the rope section placed in the gap between them. Thereby, the rope section is subjected to compression in its transverse direction as well as tensile loading in its longitudinal direction due to the load exerted on the rope. In prior art, at least one of the gripping members movable, whereby said relative movement is achieved. Reliability of this kind of configuration relies largely on the grip produced by the compression between the rope surface and the gripping face. The rope end should be firmly gripped such that it can't slide out of the compression gap, because this would mean that the suspension of the particular rope would be lost. This kind of rope terminal arrangement has the drawback that a reliable grip is difficult to provide simply. This is the case particularly, when the surface of the rope end is made of material sensitive to deformation under stress, such as elastic polymer materials, like polyurethane, for instance. The surface material is subjected to continuous compression and shear stress, which may cause increasing deformation over time (creep). In long term, the creep phenomenon can lead to slipping which might result, in the worst case, in unexpected loss of suspension of the particular rope fixed by the rope terminal solution.

The mechanical connection between the rope and the gripping device must be reliable and stable in addition to cost effective construction. A drawback of the existing termination solutions has been that they have been difficult to design for producing good reliability with simple structure, in particular such that creep is prevented. Furthermore, installation methods on the site have required careful concentration due to fine adjustment of components of the fixing solution. This has increased the time consumed for the installation process as well as increased risks.

### BRIEF DESCRIPTION OF THE INVENTION

The object of the invention is to provide a method for fabricating a rope terminal arrangement for belt-shaped ropes of an elevator producing a rope terminal arrangement, which is improved in terms of its reliability. An object is particularly to provide a reliable solution alleviating risks related to creep of rope gripping with simple structure that can be cost-effectively fabricated and easily installed. With the solution, one or more of the above defined problems of prior art and/or problems discussed or implied elsewhere in the description can be alleviated. An objective is to achieve said advantages with a solution not prone to damaging the rope. A further objective is to achieve said advantages with a solution suitable for ropes which don't tolerate sharp bends. Using the solution presented, inter alia, it is possible to facilitate firmness of the grip contact between the rope and the gripping member(s) of the solution. Using the solution presented, inter alia, it is furthermore possible to install the ropes relatively quickly on the installation site.

It is brought forward a new method for fabricating a rope terminal arrangement of an elevator for fixing an end of a belt-shaped elevator rope to a fixing base, comprising providing a belt-shaped elevator rope comprising a coating forming the outer surface of the rope; providing at least one gripping member having a gripping face; providing a wedge frame delimiting a wedge-shaped space; placing the gripping face of each said gripping member against the coating of a rope section of the belt-shaped rope; bonding the gripping face of each said gripping member and the coating of the rope section together. The method further comprises, in particular and subsequent said bonding, wedging the at least one gripping member and the rope section in the wedge shaped space. By the bonding, additional adhesion can be created. Owing to the bonding, the at least one gripping member are carried by the rope section. This facilitates easy installation on the site as the gripping members are not separate components. With this configuration, one or more of the above mentioned advantages and/or objectives are achieved. In particular, with this configuration a reliable solution alleviating risks related to creep of rope gripping with simple structure is provided. Preferable further features/steps are introduced in the following, which further features can be combined with the method individually or in any combination.

In a preferred embodiment, the belt-shaped elevator rope comprises one or more load bearing members embedded in the coating forming the outer surface of the rope.

In a preferred embodiment, the coating is thermoplastic coating and the bonding is performed by heat treatment. Hereby" a well holding bonding can be achieved. Hereby, it is particularly provided that the coating is reshaped to fit the gripping face of the gripping member in question, and to form a counterpart for any minor or major unevenness of the gripping face. Preferably, the coating is made of thermoplastic polymer material, most preferably of thermoplastic polyurethane.

In a preferred embodiment, the coating is thermoplastic coating and said bonding comprises heating the coating and subsequently cooling the coating. Thus, the bonding is performed by heat treatment. Preferably, said heating the coating, and preferably also the subsequent cooling the coating, is performed while the gripping face and the coating of the rope section are pressed together. Said cooling may include cooling by ambient air or by a specific cooling device. Said cooling is preferably continued a predefined time and/or until the coating reaches a predefined state, such as predefined solidity.

In a preferred embodiment, said bonding comprises pressing the gripping face and the coating of the rope section together.

In a preferred embodiment, said heating is performed by conducting heat to the coating via the gripping face of the gripping member. The gripping member is or has been heated for this purpose.

In a preferred embodiment, said pressing is performed with one or more heating elements.

In a preferred embodiment, said heating is performed at least until the surface of the coating softens or melts.

In a preferred embodiment, the gripping member comprises metal. Thus, it is rigid for transmitting forces but also suitable for conducting heat in a heat treatment. Preferably, it is made of metal.

In a preferred embodiment, the wedge-shaped space tapers towards an opening through which the rope can pass. In the wedging, the rope is arranged to pass through said opening and the at least one gripping member and the rope section are wedged in the wedge shaped space such that they are immovable relative to the wedge frame towards said opening.

In a preferred embodiment, in said placing the gripping face against the coating of the rope section of the belt-shaped rope the gripping face is placed against a lateral side of the rope section formed by said coating, said lateral side being a wide side of the rope section, i.e. the lateral side facing in thickness direction of the rope.

In a preferred embodiment, the method comprises after said bonding placing the rope section and the at least one gripping member together into the wedge-shaped space.

In a preferred embodiment, the gripping face of each said gripping member is provided with uneven surface pattern for facilitating grip between said gripping face and the coating. Preferably, said uneven surface pattern is a knurling pattern, such as a diamond knurling pattern or a straight knurling pattern. Preferably, said uneven surface pattern comprises plurality of protrusions protruding into the coating, and plurality of grooves between the protrusions. The grooves are preferably between the protrusions p in longitudinal direction of the rope section, because hereby an effective shape locking for blocking relative movement in said longitudinal direction is formed. Preferably, height (h) of said protrusions is less than 2.0 mm, most preferably within range 0.5 mm - 1.5 mm.

In a preferred embodiment, said first gripping face is provided with uneven surface pattern and in said pressing the gripping face and the coating of the rope section together such that the protrusions of the uneven surface pattern penetrate the softened or melted coating.

In a preferred embodiment, majority, i.e. more than 50%, preferably 80-100%, of the contact area formed between the gripping face and the side of the rope section is established via the uneven surface pattern.

In a preferred embodiment, said uneven surface pattern covers at least majority, i.e. more than 50%, preferably 80-100% of the gripping face. Thereby majority of the contact area formed between each gripping face and the side of the rope section against which it is set, is established via a uneven surface pattern.

In a preferred embodiment, density of said protrusions is high. Preferably, when said uneven surface pattern is a straight knurling pattern the density is at least 3 protrusions per cm as measured in longitudinal direction of the rope section, more preferably even more. Preferably, when said uneven surface pattern is a diamond knurling pattern the density is at least 9 protrusions per square cm, more preferably even more

In a preferred embodiment, said one or more load bearing members extend parallel to the longitudinal direction of the rope unbroken throughout the length of the rope.

In a preferred embodiment, the coating is elastic.

In a preferred embodiment, said one or more load bearing members is/are made of composite material comprising reinforcing fibers embedded in polymer matrix, said reinforcing fibers preferably being carbon fibers.

In a preferred embodiment, said matrix is not made of thermoplastic polymer material. Thus, it is particularly well compatible with the method involving heat treatment as the load bearing members are not affected by the heat. Preferably, the matrix is made of thermosetting polymer material, such as thermosetting epoxy.

In a preferred embodiment, the reinforcing fibers of each load bearing member are substantially evenly distributed in the polymer matrix of the load bearing member in question. Furthermore, preferably, over 50% of the cross-sectional square area of the load bearing member consists of said reinforcing fibers. Thereby, a high tensile stiffness can be facilitated. Preferably, the load bearing members cover together over 50% proportion of the cross-section of the rope.

In a preferred embodiment, substantially all the reinforcing fibers of each load bearing member are parallel with the longitudinal direction of the load bearing member. Thereby the fibers are also parallel with the longitudinal direction of the rope as each load bearing member is oriented parallel with the longitudinal direction of the rope. This facilitates further the longitudinal stiffness of the rope. In this context the disclosed rope terminal arrangement is particularly advantageous, because it does necessitate sharp bending of the rope.

In a preferred embodiment, in said placing, the gripping face of each said gripping member is placed against the coating of a rope section such that the coating and the gripping face are in contact. Preferably, no substances are added between them.

In a preferred embodiment, the contact area formed between the lateral side of the rope section and the gripping face covers at least majority of the width of said side, preferably at least 80% of said width.

In a preferred embodiment, the width/thickness ratio of the rope is more than two, preferably more than 4.

In a preferred embodiment, the rope is arranged to suspend at least an elevator car of the elevator.

In a preferred embodiment, the rope section is straight, and thereby not bent into an arc, and the gripping face of each said gripping member is also straight and positioned relative to the rope section such that it is parallel with the longitudinal direction of the rope section. Thus, the rope terminal arrangement is particularly advantageous when the rope is rigid, and needs to be fixed by a rope terminal arrangement without bending.

In a preferred embodiment, the rope section is less than 1 meter distance away from the end face of the rope, the total length of the rope being more than 10 meters, preferably more than 100 meters. Thereby, fixing the rope via said rope section is an 'end fixing' of the rope.

In a preferred embodiment, the method comprises fixing the wedge frame to a fixing base, such as to an elevator car or to a counterweight or to a stationary structure of a building, thereby fixing the rope via the wedge frame to the mounting base.

In a preferred embodiment, each said at least one gripping member has a wedge-shape or the method comprises providing and placing a wedge member having a wedge-shape between the wedge frame and each said at least one gripping member. Said wedging then comprises wedging the wedge member in the wedge shaped space between the wedge frame and the gripping member in question such that it wedges the gripping member in question to press via its gripping face against the rope section. With the latter configuration, functions of the device are divided for discrete components, which can be designed optimal for the function in terms of their material, shape and performance. Also, their manufacturing process can be simplified and optimized. For example, the gripping members can thus be provided with a complex surface pattern simply and cost effectively. The details of the gripping face surface pattern can also be optimized in terms of reliability.

In a preferred embodiment, said at least one gripping member comprises two gripping members, and in said placing the gripping faces of the two gripping members are placed against opposite lateral sides of the rope section. In the wedging the at least one gripping member and the rope section are wedged in the wedge shaped space such that the gripping faces of the gripping members press against the opposite lateral sides of the rope section. The bonding is preferably performed simultaneously for both the gripping members.

In a preferred embodiment, the belt-shaped elevator rope is toothed or ribbed comprising a tooth-pattern or rib-pattern and said bonding comprises pressing the gripping face and the coating of the rope section together such that said tooth-pattern or rib-pattern (of the pressed rope section) is at least substantially flattened, in particular such that spaces between adjacent teeth or adjacent ribs receive material of the tooth/ribs forced by the pressure.

It is also brought forward a new rope terminal arrangement comprising a belt-shaped elevator rope comprising a coating forming the outer surface of the rope; at least one gripping member having a gripping face; and a wedge frame delimiting a wedge-shaped space; wherein the gripping face of each said gripping member and the coating of the rope section has been bonded together; and the at least one gripping member and the rope section have been wedged in the wedge shaped space. With this configuration, one or more of the above mentioned advantages and/or objectives are achieved as already above mentioned. The new rope terminal arrangement of an elevator preferably comprises one or more of the features in any combination mentioned in the description of the method above or elsewhere in the application. The new rope terminal arrangement of an elevator is preferably obtained with the method as defined in any of the preceding claims. With this configuration, one or more of the above mentioned advantages and/or objectives are achieved as already above mentioned.

In a preferred embodiment, the coating is thermoplastic coating and the bonding has been performed by heat treatment.

It is also brought forward a new elevator, which comprises a rope terminal arrangement as defined anywhere above fixing an end of a hoisting rope of the elevator immovably to a fixing base. Preferably, the rope is arranged to suspend at least the elevator car of the elevator. Preferably, the elevator is further such that it comprises a hoistway; one or more elevator units vertically movable in the hoistway, including at least said elevator car.

The elevator is preferably such that the car thereof is arranged to serve two or more landings. The elevator preferably comprises an elevator control unit controlling movement of the car in response to calls from landing(s) and/or destination commands from inside the car so as to serve persons on the landing(s) and/or inside the elevator car. Preferably, the car has an interior space suitable for receiving a passenger or passengers, and the car can be provided with a door for forming a closed interior space.

### BRIEF DESCRIPTION OF THE DRAWINGS

In the following, the present invention will be described in more detail by way of example and with reference to the attached drawings, in which
Figure 1 illustrates a stage of an embodiment of the method.
Figure 2 illustrates further preferred details for carrying out the method of Figure 1.
Figure 3 cross section of the rope according to a first preferred embodiment.
Figure 4 cross section of the rope according to a second preferred embodiment.
Figure 5 illustrates further preferred details for carrying out the method of Figure 2 when the rope comprises contoured surface.
Figure 6 illustrates the new cross section that the rope section of the rope has resulting due to the treatment of Figure 5.
Figure 7 illustrates an embodiment of a completed rope terminal arrangement.
Figure 8a illustrates cross section A-A of Figure 7.
Figure 8b an enlarged section of Figure 8a.
Figure 9 illustrates an elevator according to a first embodiment implementing the rope terminal arrangement.
Figure 10 illustrates an elevator according to a second embodiment implementing the rope terminal arrangement.
Figure 11 illustrates preferred partially a cross section of a load bearing member of the rope as viewed in longitudinal direction of load bearing member and the rope.
Figure 12 illustrates three-dimensionally a load bearing member of the rope.
Figure 13 illustrates the uneven surface pattern of a gripping member according to a first preferred type.
Figure 14 illustrates the rope being gripped a gripping members in accordance with Figure 8a.
Figure 15 illustrates the uneven surface pattern of a gripping member according to a second preferred type.
Figure 16 illustrates the rope being gripped a gripping members in accordance with Figure 8a.

The foregoing aspects, features and advantages of the invention will be apparent from the drawings and the detailed description related thereto.

### DETAILED DESCRIPTION

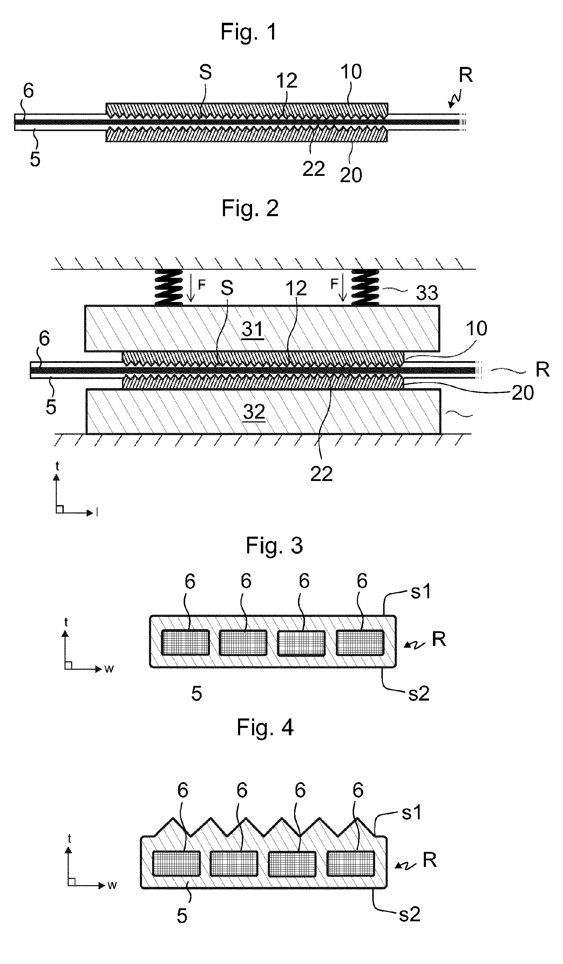

Figure 1 illustrates a stage of a preferred embodiment of a method for fabricating a rope terminal arrangement A for fixing an end of a rope R of an elevator to a fixing base of an elevator. The rope terminal arrangement A being fabricated is one utilizing wedging of a rope section S of the rope R in a wedge space. In the method a belt-shaped elevator rope R is provided, the rope R comprising a coating 5 forming the outer surface of the rope R. One or more load bearing members 6 may be embedded in the coating, as will be later explained, whereby a proper load bearing ability for the rope R is established.

In the method, at least one gripping member 10,20 having a gripping face 12,22 is furthermore provided. The gripping face 12,22 of each said gripping member 10,20 is then placed against the coating 5 of a rope section S of the belt-shaped rope R, which rope section S is intended to be gripped by the at least one gripping member 10,20, such that the coating 5 and the gripping face 12,22 are in contact. After said placing of the gripping face(s) 12,22 against the coating 5 of the rope section S, the gripping face 12,22 of each said gripping member 10,20 and the coating 5 of the rope section S are bonded together. In the embodiment illustrated in Figure 1, said at least one gripping member 10,20 the gripping face of which is bonded together with the rope section S, comprises two of said gripping members 10,20. Then, in said placing the gripping faces 12,22 of the two gripping members 10,20 are placed against opposite lateral sides of the rope section S, as illustrated. The bonding is preferably performed simultaneously for both the gripping members 10,20. Owing to the bonding, the at least one gripping member 10,20 are carried by the rope section S. This facilitates easy installation on the site as the gripping members are not separate components. Also, the components are thus prefixed to each other already before wedging operation. By the bonding, additional adhesion can be created.

In the preferred embodiment illustrated in Figure 2, the bonding is performed by heat treatment. The coating 5 is in this case thermoplastic coating 5, for which purpose the coating 5 is preferably made of thermoplastic polymer material, preferably of thermoplastic polyurethane. To achieve good adhesion, said bonding comprises heating the coating 5 and subsequently cooling the coating 5. To further facilitate adhesion between components being bonded, in particular to increase contact area between them, said bonding comprises pressing the gripping face 12,22 and the coating 5 of the rope section S together. Said heating, and preferably also said cooling, is carried out while the gripping face 12,22 of each gripping member 12,22 and the coating 5 of the rope section S are pressed together. Heat treatment provides that the coating 5 is reshaped to fit the gripping face of the gripping member in question, and to form a counterpart for any minor or major unevenness of the gripping face. This makes them counterparts for each other. Hereby, the rope section S and the gripping face 10,20 become connected both by mechanical interlocking and chemical bonding. For the best result, said first gripping face is provided with uneven surface pattern and said pressing the gripping face and the coating 5 of the rope section S together such that the protrusions of the uneven surface pattern penetrate the softened or melted coating.

In the embodiment presented in Figure 2, said heating of the coating 5 is performed by conducting heat to the coating 5 via the gripping member 10,20, and in particular via the gripping face 12,22 of the gripping member 10,20 placed against the coating 5. So as to facilitate good conductance of heat, each of said at least one gripping member 10,20 preferably comprises metal, most preferably being made of metal.

Said pressing of the gripping members 10,20 is performed with one or more pressing elements 31,32. Said heating of the gripping members 10,20 is performed with one or more heating elements 31,32 for heating the gripping members 10,20. As visible, in the preferred embodiment the one or more heating elements 31,32 also serve as pressing elements. Thus, each gripping member 10,20 can be heated and pressed against the coating 5 by the same element(s) 31.

Preferably, said heating is performed at least until the surface of the coating 5 softens. Thereby, formation of firm adhesion is facilitated. The adhesion can be facilitated further if said heating is performed at least until the surface of the coating 5 melts.

To achieve the pressing effect, the pressing element(s) 31,32 include pressing elements 31,32 on opposite sides of the stack formed by the rope section S and the at least one gripping member 10,20. The pressing element(s) 31,32 include movable pressing elements (the pressing elements above the rope in Figure 1) that may be moved by one or more springs 33 as illustrated, but this is not necessary, as also alternative means can be used such as electrical actuators. To achieve the heating effect, the pressing elements/heating element(s) 31,32 may be connected to a source of electricity and configured either to form a resistance heater or to include a resistance heater component, for example.

Figures 3 and 4 illustrate preferred alternative details of the belt-shaped elevator rope R. Figures illustrate each a cross section of the rope R. In the preferred embodiments shown, the rope R comprises the coating 5 forming the outer surface of the rope R, as above described. The rope R further comprises one or more load bearing members 6 embedded in said elastic coating 5 which one or more load bearing members 6 extend parallel to the longitudinal direction of the rope R unbroken throughout the length of the rope R. In case there are plurality of the load bearing members 6, they are preferably adjacent each other in width direction of the rope R as illustrated. In the present case, there are four of said load bearing members embedded in said elastic coating 5, but the rope R could alternatively have any other number of load bearing members 6, such as only one load bearing member 6 wide in width direction of the rope R.

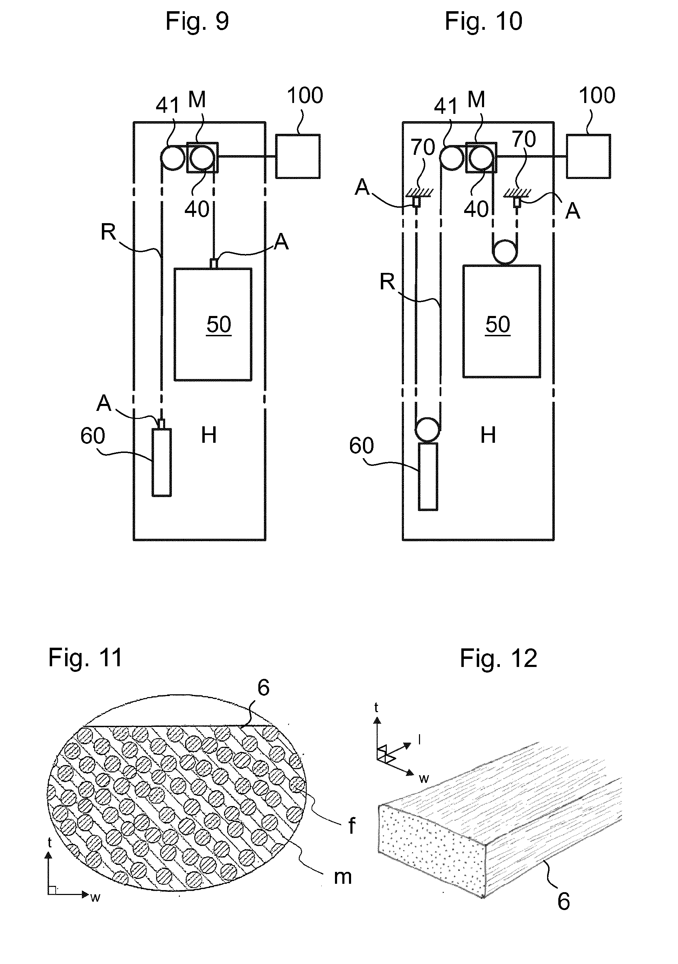

The coating 5 is preferably elastic. With the coating, the rope is provided with a surface via which the rope can effectively engage frictionally with a drive wheel, for instance. Also, hereby the friction properties of the rope are adjustable to perform well in the intended use, for instance in terms of traction. Furthermore, the load bearing members 6 embedded therein are thus provided with protection. Elastic material, and particularly polyurethane provides the rope R good frictional properties and wear resistance. Polyurethane is in general well suitable for elevator use, but also materials such as rubber or equivalent elastic materials are suitable for the material of the coating. Preferred structure of the load bearing members 6 is further described referring to Figures 11-12.

As mentioned, the rope R is belt-shaped, whereby it is larger in its width direction w than in its thickness direction t. The rope R being belt-shaped the rope section S has opposite wide sides, which can be gripped by a gripping face 12,22 with large contact area. It is preferable that the contact area is made large such that the contact area formed between a side s1,s2 of the rope section S and a gripping face 12,22 covers at least majority of the width of said side s1,s2, preferably at least 80% of said width. Large contact area is preferable particularly because it facilitates getting a firm hold of the rope section S gently. Thereby, the rope terminal arrangement A can be made suitable for ropes of material which is sensitive to breaking or rupture, such as ropes having surface material and/or load bearing members of the sensitive kind. This is the case particularly when the rope has a coating 5 and/or load bearing members 6 made of brittle material such as composite material specified elsewhere in the application.

Said one or more load bearing members 6 is/are preferably, but not necessarily, made of composite material comprising reinforcing fibers f embedded in polymer matrix m, said reinforcing fibers preferably being carbon fibers. With this kind of structure, the rope R is rigid against bending. Therefore, it is particularly advantageous that the rope R is fixed by means that do not cause sharp bends thereto. In many ways, gentleness of the fixing is preferable so as to avoid damaging the load bearing members. In particular, it is preferable that the fixing is implemented by exerting an even force distribution on large surface of the rope, e.g. instead of screws which are likely to damage brittle load bearing members.

The width/thickness ratio of the rope R is preferably at least 2 more preferably at least 4, or even more. In this way a large cross-sectional area for the rope is achieved, the bending capacity around the width-directional axis being favourable also with rigid materials of the load bearing member. Thereby, the rope R suits very well to be used in hoisting appliances, in particular in elevators, wherein the rope R needs to be guided around rope wheels. Also, it is preferable that the load bearing members 6 are wide. Accordingly, each of said one or more load bearing members 6 is preferably larger in its width direction w than in its thickness direction t of the rope R. Particularly, the width/thickness ratio of each of said one or more load bearing members is preferably more than 2. Thereby, the bending resistance of the rope is small but the load bearing total cross sectional area is vast with minimal non-bearing areas.

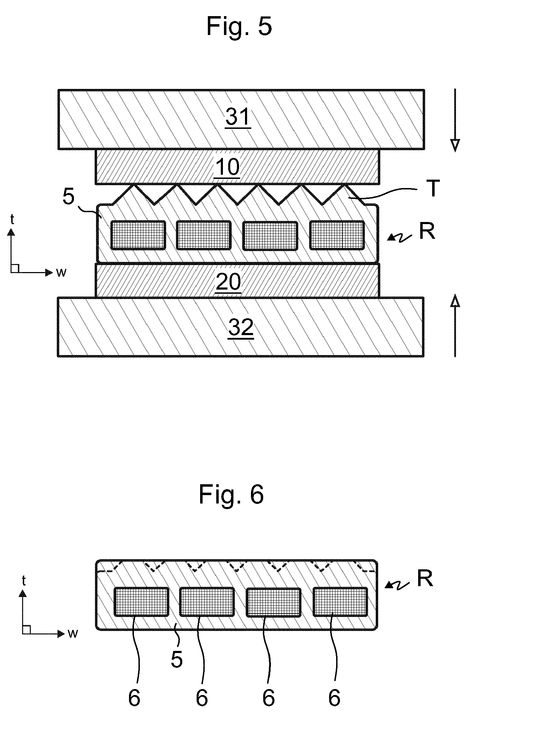

The belt-shaped elevator rope R can have a smooth opposite wide sides s1,s2 as illustrated in Figure 3, or it can be toothed or ribbed comprising a tooth-pattern or rib-pattern. Figure 4 illustrates a cross section for the rope R when it has a rib-pattern. Said rib-pattern comprises elongated ribs and grooves extending parallel to the longitudinal direction I of the rope R. Figure 5 illustrates further details for the method in accordance with Figure 2 when the rope R is in accordance with Figure 4. Here, said bonding comprises pressing the gripping face 12,22 and the coating 5 of the rope section S together such that said tooth-pattern or rib-pattern (as illustrated) is at least substantially flattened, in particular such that spaces between adjacent teeth or adjacent ribs (as illustrated) receive material of the tooth/ribs forced by the pressure. Figure 6 illustrates the new cross section that the rope section S of rope R has resulting due to the treatment. The "peaks" formed by the coating 5 have melted and the melted part of the coating 5 has filled the empty" spaces.

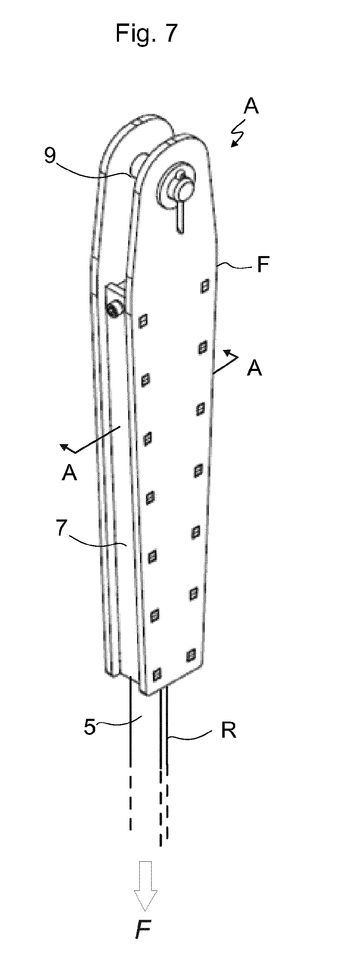

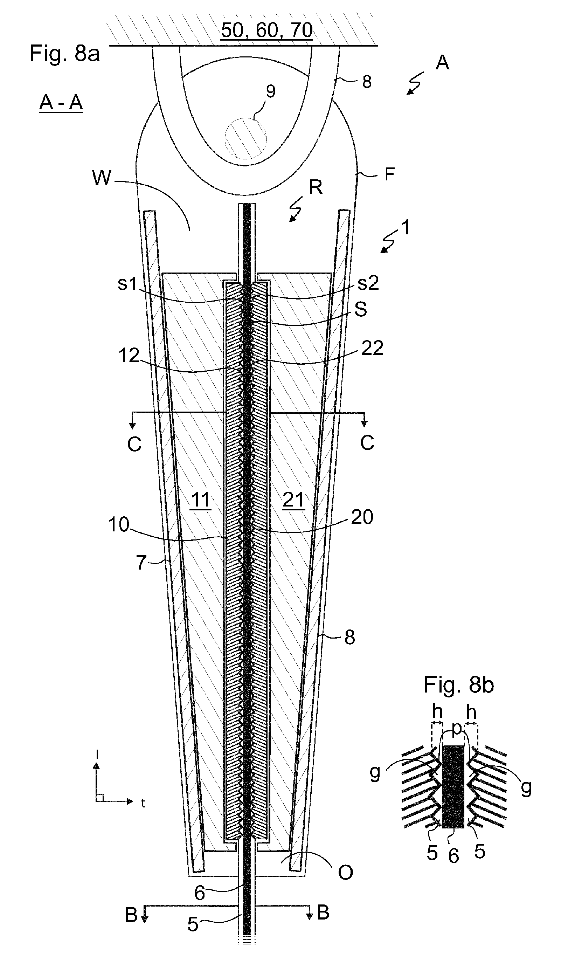

In the method, furthermore a wedge frame F delimiting a wedge-shaped space W is provided. A preferred kind of a wedge frame F is illustrated in Figures 7 and 8. The wedge-shaped space W of the wedge frame F tapers towards an opening O through which the rope R can pass. Providing the wedge frame F can be performed at a suitable moment in the method prior the wedging step. Subsequent said bonding, in the method, the rope section S and the at least one gripping member 10,20 are placed together into the wedge-shaped space W. At this stage, and thereby also subsequent said bonding, the rope R is arranged to pass through said opening O and the at least one gripping member 10,20 and the rope section S are wedged in the wedge shaped space W, in particular such that they are immovable relative to the wedge frame F towards said opening O. In the wedging step, each said gripping member 10,20 is wedged to press against the rope section S in the wedge shaped space W.

In the embodiment illustrated in Figure 8, the method comprises providing and placing a wedge member 11,21 having a wedge-shape between the wedge frame F and each said at least one gripping member 10,20. Thereby efficient wedging effect is facilitated. Furthermore, the design of the gripping member 10,20 can be optimized for maximizing gripping effect and/or for optimizing the manufacturing thereof. A complex pattern for the gripping face can be provided simply and cheaply, for example, because the gripping member can be formed thin and/or with substantially uniform thickness. Said wedging step then comprises wedging the wedge member 11,21 in the wedge shaped space W between the wedge frame F and the gripping member 10,20 in question such that it wedges the gripping member 10,20 in question to press via its gripping face 11,21 against the rope section S.

Alternatively, it is possible to design each said at least one gripping member 10,20 to have a wedge-shape whereby efficient wedging effect is facilitated and no additional wedging members need to be added between the gripping member and the wedge frame to enhance wedging effect. In this case, the gripping member and the wedge member of Figure 8 would be integrated in one-piece structure.

Hereinafter, Figures 7 and 8a-8b are described in further details. Figure 7 illustrates an embodiment of a completed rope terminal arrangement A fixing an end of a hoisting rope R of the elevator immovably to a fixing base 50,60,70 (showed in Figure 8). Figure 8a illustrates a cross section A-A of the rope terminal arrangement A of Figure 7. The rope terminal arrangement A comprises a belt-shaped rope R, and a gripping equipment arranged to grip a rope section S of the belt-shaped rope R via two gripping faces 12,22 facing each other and set against opposing sides s1,s2 of the rope section S placed in a gap between the gripping faces 12,22. The gripping faces 12,22 are wedgeable towards each other such that the gap between them is at least slightly narrowed so as to cause compression on the rope section placed in the gap between them. The gripping equipment further comprises a wedge frame F comprising a first side wall 7 and second side wall 8, which are at an acute angle relative to each other and delimiting a wedge-shaped space W wherein said rope section S is placed.

The gripping equipment further comprises a 'first' gripping member 10 disposed in the wedge shaped space W, the first gripping member 10 having said first gripping face 12 set against the first side s1 of said rope section S, said first gripping face 12 being provided with uneven surface pattern P for facilitating grip between said first gripping face 12 and said first side s1 of the rope section S. The gripping equipment further comprises first wedge member 11 wedged in the wedge shaped space W between a side wall 7 of the wedge frame F and the first gripping member 10 such that it wedges the first gripping member 10 to press, in particular with said first gripping face 12, against the first side s1 of the rope section S. The first gripping member 10 and the first wedge member 11 are thus discrete members.

Figure 8b illustrates an enlarged section of Figure 8a showing a preferred details of the uneven surface pattern P. The uneven surface pattern P comprises plurality of protrusions p and plurality of grooves g between the protrusions, the protrusions protruding into the coating 5 of the rope section S. The grooves g are between the protrusions p in longitudinal direction I of the rope section S, because hereby an effective shape locking for blocking relative movement in said longitudinal direction I of the rope is formed.

The gripping equipment in this preferred embodiment further comprises a second gripping member 20 disposed in the wedge shaped space W. However, this is not necessary as for achieving compression, it is adequate if only one of the gripping faces is wedgeable in the wedge shaped space W. Accordingly, as an alternative to the symmetrical construction, the second gripping face could be formed by the wall 8 of the wedge frame F, in which case said wall would be so disposed that the gripping face is parallel with the second side s2 of the section S of the rope R. In the embodiment illustrated, the second gripping member 20 has said second gripping face 22 set against the second side s2 of said rope section S, said second gripping face 22 being provided with uneven surface pattern P for facilitating grip between said second gripping face 22 and said second side s2 of the rope section S. The gripping equipment further comprises a second wedge member 21 wedged in the wedge shaped space W between a side wall 8 of the wedge frame F and the second gripping member 20 such that it wedges the second gripping member to 20 press, in particular with said second gripping face 22, against the second side s2 of the rope section S. The second gripping member 20 and the second wedge member 21 are thus discrete members.

The gripping equipment is arranged to block movement of the gripping faces 12,22 in longitudinal direction of the section S, whereby it is also arranged to block movement of the rope section S away from the wedge shaped space W. The rope R is under tension and an end thereof is fixed immovably to a fixing base 50,60,70, such as to an elevator car 50 or to a counterweight 60 or to a stationary structure 70 of a building with said rope terminal arrangement A. For this purpose, the rope terminal arrangement A comprises fixing means 8,9 for fixing the gripping equipment, in particular the wedge frame F thereof, on the fixing base 50,60,70. In the preferred embodiment of Figure 7 and 8a-8b, the fixing means comprise a fixing pin 9 comprised in the wedge frame F and a fixing ring 8 comprised in the fixing base, and the fixing pin 9 is inserted in the fixing ring 8.

Figures 9 and 10 illustrate preferred embodiments of an elevator implementing a rope terminal arrangement A as described above. The elevator comprises a hoistway H and elevator units 50,60 vertically movable in the hoistway H. The elevator units 50,60 include in this case an elevator car 50 and a counterweight 60. In both cases, the elevator further comprises one or more belt-shaped ropes R, each being connected with said elevator units 50, 60 and having two ends, each end being fixed immovably to a fixing base 50,60,70. Each said rope R suspends the elevator units 50,60 whereto it is connected. The elevators illustrated differ from each other in terms of their suspension ratios, i.e. how the ropes have been connected with the elevator units. In the embodiment of Figure 9, the fixing base is for one end of the rope R the elevator unit 50 and for the other end the elevator unit 60. In the embodiment of Figure 10, on the other hand, the fixing base is for both ends of the rope R a stationary structure 70 of the building wherein the elevator is installed. The elevator further comprises a rope terminal arrangement A provided on each of said ends of the rope R fixing the end in question immovably to its fixing base 50,60,70. The rope terminal arrangement A is as described elsewhere in the application.

The elevator illustrated in each of Figures 9 and 10 is more specifically such that it comprises one or more upper rope wheels 40,41 mounted higher than the car 50 and the counterweight 60, in this case particularly in proximity of the upper end of the hoistway H. In this case there are two of said rope wheels 40,41 but the elevator could be implemented also with some other number of rope wheels. Each of said one or more ropes R pass around said one or more rope wheels 40,41 mounted in proximity of the upper end of the hoistway H. In this case the one or more rope wheels 40,41 are mounted inside the upper end of the hoistway, but alternatively they could be mounted inside a space beside or above the upper end of the hoistway H. Said one or more rope wheels 40,41 comprise a drive wheel 40 engaging said one or more ropes R and the elevator comprises a motor M for rotating the drive wheel 40. The elevator car 50 can be moved by rotating the drive wheel 40 engaging the rope(s) R. The elevator further comprises an elevator control unit 100 for automatically controlling rotation of the motor M, whereby the movement of the car 50 is also made automatically controllable.

Each of said one or more belt-shaped ropes R passes around the one or more rope wheels 40,41 the wide side thereof, i.e. the side facing in thickness direction t of the rope R, resting against the rope wheel 40,41. Each rope R passes around the one or more rope wheels 40,41 turning around an axis extending in width direction w of the rope R.

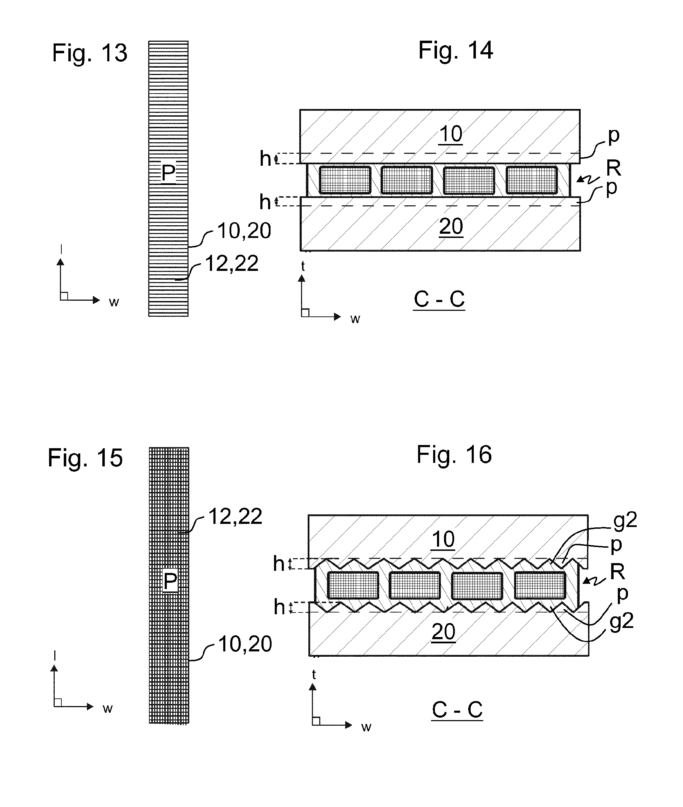

Figures 13 and 15 illustrate the preferred alternatives for said uneven surface pattern. In both cases, the uneven surface pattern is a knurling pattern. The uneven surface pattern being knurling pattern provides that the uneven surface pattern comprises plurality of protrusions p and plurality of grooves g between the protrusions, the protrusions protruding into the coating 5 of the rope section S in the completed arrangement A. When said bonding has been performed by heat treatment as specified above, the protrusions extend into recesses permanently formed into the coating 5 of the rope section S at the points of the protrusions when the gripping face 12,22 in question and the rope section S were pressed together during the heat treatment. The grooves g are preferably between the protrusions p in longitudinal direction I of the rope section S, because hereby an effective shape locking for blocking relative movement in said longitudinal direction I is formed. Figure 13 illustrates said uneven surface pattern according to a first preferred type wherein said uneven surface pattern is a straight knurling pattern. Figure 14 illustrates the resulting grip, as viewed in longitudinal direction I of the rope section S of the rope R, when it is gripped with gripping faces according to said first type. The knurling pattern here comprises plurality of protrusions p and plurality of grooves g between the protrusions, the protrusions protruding into the surface material of the rope section S as already illustrated in Figure 8a and 8b. The grooves g are oriented to extend transversely relative to longitudinal direction I of the rope section S, as preferred so as to facilitate hold of the gripping. More specifically, the grooves g are straight and parallel with each other. Figure 15 illustrates said uneven surface pattern according to a second preferred type wherein said uneven surface pattern is a diamond knurling pattern. Figure 16 illustrates the resulting grip, as viewed in longitudinal direction I of the rope section S of the rope R, when it is gripped with gripping faces according to said second type. The knurling pattern P here comprises plurality of protrusions p and plurality of grooves g between the protrusions, the protrusions protruding into the surface material of the rope section S as already illustrated in Figure 8a and 8b. The grooves g are oriented to extend transversely relative to longitudinal direction I of the rope section S, as preferred so as to facilitate hold of the gripping. More specifically, the grooves g are straight and parallel with each other. Here, the knurling pattern P further comprises plurality of second grooves g2, crossing the grooves g. Hereby, contact surface between the bonded components is further increased. In both embodiments, said uneven surface pattern P covers majority, i.e. more than 50%, of the surface of the gripping face 12,22. Thereby, it is facilitated that majority of the contact area formed between each gripping face and the side of the rope section against which it is set, is established via the uneven surface pattern P. It is preferable, that said uneven surface pattern P covers 80-100% of the surface of the gripping face 12,22. Height h of said protrusions, measured orthogonal direction of the gripping face in question, is preferably less than 2.0 mm, most preferably within range 0.5 mm - 1.5 mm. Thus, the protrusions protrude into the surface material of the rope section S such that holding capacity is optimally improved without damaging the rope, when the gripping face 12,22 in question and the rope section S are pressed against each other.

Figure 11 illustrates a preferred inner structure for said load bearing member 6, showing inside the circle an enlarged view of the cross section of the load bearing member 6 close to the surface thereof, as viewed in the longitudinal direction I of the load bearing member 6. The parts of the load bearing member 6 not showed in Figure 11 have a similar structure. Figure 12 illustrates the load bearing member 6 three dimensionally. The load bearing member 6 is made of composite material comprising reinforcing fibers f embedded in polymer matrix m. The reinforcing fibers f are more specifically distributed substantially evenly in polymer matrix m and bound to each other by the polymer matrix. The load bearing member 6 formed is a solid elongated rod-like one-piece structure. Said reinforcing fibers f are most preferably carbon fibers, but alternatively they can be glass fibers, or possibly some other fibers. Preferably, substantially all the reinforcing fibers f of each load bearing member 6 are parallel with the longitudinal direction of the load bearing member 6. Thereby, the fibers f are also parallel with the longitudinal direction of the rope R as each load bearing member 6 is oriented parallel with the longitudinal direction of the rope R. This is advantageous for the rigidity as well as behavior in bending. Owing to the parallel structure, the fibers in the rope R will be aligned with the force when the rope R is pulled, which ensures that the structure provides high tensile stiffness. The fibers f used in the preferred embodiments are accordingly substantially untwisted in relation to each other, which provides them said orientation parallel with the longitudinal direction of the rope R. This is in contrast to the conventionally twisted elevator ropes, where the wires or fibers are strongly twisted and have normally a twisting angle from 15 up to 40 degrees, the fiber/wire bundles of these conventionally twisted elevator ropes thereby having the potential for transforming towards a straighter configuration under tension, which provides these ropes a high elongation under tension as well as leads to an unintegral structure. The reinforcing fibers f are preferably long continuous fibers in the longitudinal direction of the load bearing member 6, preferably continuing for the whole length of the load bearing member 6.

As mentioned, the reinforcing fibers f are preferably distributed in the aforementioned load bearing member 6 substantially evenly. The fibers f are then arranged so that the load bearing member 6 would be as homogeneous as possible in the transverse direction thereof. An advantage of the structure presented is that the matrix m surrounding the reinforcing fibers f keeps the interpositioning of the reinforcing fibers f substantially unchanged. It equalizes with its slight elasticity the distribution of force exerted on the fibers, reduces fiber-fiber contacts and internal wear of the rope, thus improving the service life of the rope R. Owing to the even distribution, the fiber density in the cross-section of the load bearing member 6 is substantially constant. The composite matrix m, into which the individual fibers f are distributed, is most preferably made of epoxy, which has good adhesiveness to the reinforcement fibers f and which is known to behave advantageously with reinforcing fibers such as carbon fiber particularly. Alternatively, e.g. polyester or vinyl ester can be used, but any other suitable alternative materials can be used.

The matrix m has been applied on the fibers f such that a chemical bond exists between each individual reinforcing fiber f and the matrix m. Thereby a uniform structure is achieved. To improve the chemical adhesion of the reinforcing fiber to the matrix m, in particular to strengthen the chemical bond between the reinforcing fiber f and the matrix m, each fiber can have a thin coating, e.g. a primer (not presented) on the actual fiber structure between the reinforcing fiber structure and the polymer matrix m. However, this kind of thin coating is not necessary. The properties of the polymer matrix m can also be optimized as it is common in polymer technology. For example, the matrix m can comprise a base polymer material (e.g. epoxy) as well as additives, which fine-tune the properties of the base polymer such that the properties of the matrix are optimized. The polymer matrix m is preferably of a hard non-elastomer, such as said epoxy, as in this case a risk of buckling can be reduced for instance. However, the polymer matrix need not be non-elastomer necessarily, e.g. if the downsides of this kind of material are deemed acceptable or irrelevant for the intended use. In that case, the polymer matrix m can be made of elastomer material such as polyurethane or rubber for instance.

The reinforcing fibers f being in the polymer matrix means here that the individual reinforcing fibers f are bound to each other with a polymer matrix m, e.g. in the manufacturing phase by immersing them together in the fluid material of the polymer matrix which is thereafter solidified.

The reinforcing fibers f together with the matrix m form a uniform load bearing member, inside which no substantial abrasive relative movement occurs when the rope is bent. The individual reinforcing fibers f of the load bearing member 6 are mainly surrounded with polymer matrix m, but random fiber-fiber contacts can occur because controlling the position of the fibers in relation to each other in their simultaneous impregnation with polymer is difficult, and on the other hand, perfect elimination of random fiber-fiber contacts is not necessary from the viewpoint of the functioning of the solution. If, however, it is desired to reduce their random occurrence, the individual reinforcing fibers f can be pre-coated with material of the matrix m such that a coating of polymer material of said matrix is around each of them already before they are brought and bound together with the matrix material, e.g. before they are immersed in the fluid matrix material.

As above mentioned, the matrix m of the load bearing member 6 is most preferably hard in its material properties. A hard matrix m helps to support the reinforcing fibers f, especially when the rope bends, preventing buckling of the reinforcing fibers f of the bent rope, because the hard material supports the fibers f efficiently. To reduce the buckling and to facilitate a small bending radius of the load bearing member 6, among other things, it is therefore preferred that the polymer matrix m is hard, and in particular non-elastomeric. The most preferred materials for the matrix are epoxy resin, polyester, phenolic plastic or vinyl ester. The polymer matrix m is preferably so hard that its module of elasticity (E) is over 2 GPa, most preferably over 2.5 GPa. In this case the module of elasticity E is preferably in the range 2.5-10 GPa, most preferably in the range 2.5-4.5 GPa. There are commercially available various material alternatives for the matrix m which can provide these material properties. Preferably over 50% proportion of the surface area of the cross-section of the load bearing member 6 is of the aforementioned reinforcing fiber, preferably such that 50%-80% proportion is of the aforementioned reinforcing fiber, more preferably such that 55%-70% proportion is of the aforementioned reinforcing fiber, and substantially all the remaining surface area is of polymer matrix m. Most preferably, this is carried out such that approx. 60% of the surface area is of reinforcing fiber and approx. 40% is of matrix material (preferably epoxy material). In this way a good longitudinal stiffness for the load bearing member 6 is achieved. As mentioned carbon fiber is the most preferred fiber to be used as said reinforcing fiber due to its excellent properties in hoisting appliances, particularly in elevators. However, this is not necessary as alternative fibers could be used, such as glass fiber, which has been found to be suitable for the hoisting ropes as well.

In the illustrated embodiments, the load bearing members 6 are substantially rectangular and larger in width direction than thickness direction. However, this is not necessary as alternative shapes could be used. Likewise, it is not necessary that the number of the load bearing members is four which is used for the purpose of the example. The number of the load bearing members 6 can be greater or smaller. The number can be one, two or three for instance, in which cases it may be preferably to shape it/them wider than what is shown in Figures.

The rope R is furthermore such that the aforementioned load bearing member 6 or a plurality of load bearing members 6, comprised in the rope R, together cover majority, preferably 70% or over, more preferably 75% or over, most preferably 80% or over, most preferably 85% or over, of the width of the cross-section of the rope R for essentially the whole length of the rope R. Thus the supporting capacity of the rope R with respect to its total lateral dimensions is good, and the rope R does not need to be formed to be thick.

In the embodiment of Figures 7 and 8a-8b, the first gripping members 10,20 are preferably, but not necessarily, mounted on the wedge members 11,21 immovably in the longitudinal direction of the rope section S. Said mounting is preferably detachable. Also this mounting is preferably performed before placing these components in the wedge-shaped space W. In practice, the mounting is preferably implemented such that each said gripping member 10,20 is mounted on the wedge member and fixed thereon, e.g. by snap-on spring function or form-locking or other fixing means.

Preferably, each said gripping face 12,22 is straight as viewed in longitudinal direction I of the rope section S as well as parallel with said longitudinal direction of the rope section S. Likewise, the rope section S placed between them is also straight, i.e. not bent into an arc. Thus, the rope terminal arrangement A is well suitable for a rope that is rigid, and needs to be fixed by a rope terminal arrangement without bending. Thus, it is particularly well suitable for a rope where the load bearing member(s) is/are made of composite material, such as defined above. Composite material of this kind is typically rigid in all directions and thereby also difficult to bend. Rigid ropes being difficult to bend without fracturing them, they should not be fixed with means requiring sharp bends.

In the preferred embodiments presented in the Figures 9 and 10, both ends of the rope R have been fixed to similar type of a fixing base. However, the elevator could alternatively be such that one end of the rope is fixed to a one of the movable elevator units 50,60 and the other end to the stationary structure 70 of the building, which would be the case if the suspension ratios need to be set different on opposite sides of the drive wheel 40, for instance.

In the preferred embodiments, the advantageous structure for the rope R has been disclosed. However, the invention can be utilized with also other kind of belt-shaped ropes such as belt-shaped ropes having different materials. Also, the outer shape could be contoured otherwise than disclosed.

As for the manufacturing process, the gripping members can be manufactured by using machining, forging, casting, punching, extruding or by using any other suitable method. The material can be plastic, aluminum, steel or any other suitable material. In one preferred embodiment, each said gripping member is a piece cut from and extrusion-molded profile. Then, it is preferably made of aluminium or an aluminium alloy. Such a process is a way to produce the gripping members cost-effectively.

In the preferred embodiments, the protrusions p and grooves g form together a tooth -pattern. It is possible, that the uneven surface pattern takes some other form than discloses in Figures. The gripping member may alternatively be designed to be a perforated plate with claws for gripping the rope section S. The gripping member may then be in the form of a plate having claws manufactured by punching.

In the embodiment illustrated in Figure 1, the at least one gripping member the gripping face of which is bonded together with the rope section S comprises two gripping members 10,20 one on opposite sides of the rope section S. This is however not necessary, because alternatively a different number of gripping members of this kind can be provided. As already mentioned, the arrangement could be also be formed to have only one gripping member in total, i.e. a gripping member on only one of its sides. Likewise, the arrangement could be formed to have a gripping member the gripping face of which is bonded together with the rope section S on only one of its sides and on the opposite side a gripping member could be provided a gripping face of which is not bonded together with the rope section S.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A method for fabricating a rope terminal arrangement (A) of an elevator, comprising
providing a belt-shaped elevator rope (R) comprising a coating (5) forming the outer surface of the rope (R);
providing at least one gripping member (10,20) having a gripping face (12,22);
providing a wedge frame (F) delimiting a wedge-shaped space (W);
placing the gripping face (12,22) of each said gripping member (10,20) against the coating (5) of a rope section (S) of the belt-shaped rope (R);
bonding the gripping face (12,22) of each said gripping member (10,20) and the coating (5) of the rope section (S) together;
wedging the at least one gripping member (10,20) and the rope section (S) in the wedge shaped space (W).

2. A method according to claim 1, wherein the belt-shaped elevator rope (R) comprises one or more load bearing members (6) embedded in the coating (5) forming the outer surface of the rope (R).

3. A method according to any of the preceding claims, wherein the coating (5) is a thermoplastic coating (5), and the bonding is performed by heat treatment.

4. A method according to any of the preceding claims, wherein said bonding comprises heating the coating (5) and subsequently cooling the coating (5).

5. A method according to any of the preceding claims, wherein said heating the coating (5), and preferably also the subsequent cooling the coating (5), is performed while the gripping face (12,22) and the coating (5) of the rope section (S) are pressed together.

6. A method according to any of the preceding claims, wherein said bonding comprises pressing the gripping face (12,22) and the coating (5) of the rope section (S) together.

7. A method according to any of the preceding claims, wherein said heating is performed by conducting heat to the coating (5) via the gripping face (12,22) of the gripping member (10,20).

8. A method according to any of the preceding claims, wherein said heating is performed at least until the surface of the coating (5) softens or melts.

9. A method according to any of the preceding claims, wherein the wedge-shaped space tapers towards an opening (O) through which the rope (R) can pass, and in the wedging the rope (R) is arranged to pass through said opening (O) and the at least one gripping member (10,20) and the rope section (S) are wedged in the wedge shaped space (W) such that they are immovable relative to the wedge frame (F) towards said opening (O).

10. A method according to any of the preceding claims, wherein the method comprises after said bonding placing the rope section (S) and the at least one gripping member (10,20) together into the wedge-shaped space (W).

11. A method according to any of the preceding claims, wherein the gripping face (12,22) of each said gripping member (10,20) is provided with uneven surface pattern (P) for facilitating grip between said gripping face (12,22) and the coating (5), said uneven surface pattern (P) preferably comprising plurality of protrusions (p) for protruding into the coating (5), and plurality of grooves (g) between the protrusions (p).

12. A method according to any of the preceding claims, wherein said one or more load bearing members (6) are made of composite material comprising reinforcing fibers (f) embedded in polymer matrix (m), said reinforcing fibers (f) preferably being carbon fibers.

13. A method according to any of the preceding claims, wherein the belt-shaped elevator rope (R) is toothed or ribbed comprising a tooth-pattern or a rib-pattern, and said bonding comprises pressing the gripping face (12) and the coating (5) of the rope section (S) together such that said tooth-pattern or rib-pattern is at least substantially flattened, in particular such that spaces between adjacent teeth or adjacent ribs (T) receive material of the tooth/ribs forced by the pressure.

14. A rope terminal arrangement (A) of an elevator comprising a belt-shaped elevator rope (R) comprising a coating (5) forming the outer surface of the rope (R); at least one gripping member (10,20) having a gripping face (12,22); and a wedge frame (F) delimiting a wedge-shaped space (W); wherein the gripping face (12,22) of each said gripping member (10,20) and the coating (5) of the rope section (S) has been bonded together; and the at least one gripping member (10,20) and the rope section (S) have been wedged in the wedge shaped space (W).

15. A rope terminal arrangement (A) according claim 14, wherein the coating (5) is thermoplastic coating (5), and the bonding has been performed by heat treatment.

16. A rope terminal arrangement (A) of an elevator obtained with the method as defined in any of the preceding claims 1-13.

17. An elevator, which comprises a rope terminal arrangement (A) as defined in any of the preceding claims 14-16 fixing an end of a hoisting rope (R) of the elevator to a fixing base (50,60,70).
